Europäisches Patentamt

European Patent Office

Office européen des brevets

(11) Veröffentlichungsnummer: **0 177 906**
A2

(12) # EUROPÄISCHE PATENTANMELDUNG

(21) Anmeldenummer: 85112574.0

(51) Int. Cl.⁴: **B 29 C 41/04**, B 29 C 41/46

(22) Anmeldetag: 04.10.85

(30) Priorität: 10.10.84 DE 8429732 U

(71) Anmelder: **Krzepinski, Horst, Dipl.-Ing, Schulstrasse 23, D-6837 St. Leon-Rot 1 (DE)**

(43) Veröffentlichungstag der Anmeldung: **16.04.86 Patentblatt 86/16**

(72) Erfinder: **Krzepinski, Horst, Dipl.-Ing, Schulstrasse 23, D-6837 St. Leon-Rot 1 (DE)**

(84) Benannte Vertragsstaaten: **AT BE CH DE FR GB IT LI LU NL SE**

(74) Vertreter: **Ratzel, Gerhard, Dr., Seckenheimer Strasse 36a, D-6800 Mannheim 1 (DE)**

(54) Anordnung einer Rotationsvorrichtung.

(57) Eine Anordnung einer Rotationsvorrichtung (9) enthält eine Heizkammer (64), eine Kühlkammer (2) sowie einen Werkzeugträger (6) für ein Werkzeug (8) zum Schmelzen oder Gießen von Werkstücken, insbesondere aus Kunststoff. Es soll die Aufgabe gelöst werden, den Nutzungsgrad der verschiedenen Komponenten zu optimieren, wobei unterschiedliche Zeiten für die Belegung der Heizkammer (4), der Kühlkammer (2), der Manipulationsstation (10) sowie entsprechende Taktzeiten den Anforderungen entsprechend vorgebbar sein sollen. Es wird vorgeschlagen, wenigstens drei Kühlkammern (2) der Heizkammer (4) zuzuordnen. Die Kühlkammern (2) können kreisförmig um die im Zentrum befindliche Heizkammer (4) angeordnet sein, oder die Heizkammer (4) kann derart verfahrbar sein, daß die Einfahröffnung wahlweise auf eine der Kühlkammern (2) ausrichtbar ist.

ACTORUM AG

Anordnung einer Rotationsvorrichtung

Die Erfindung betrifft die Anordnung einer Rotationsvorrichtung, mit einer Manipulationsstation, mit einer Heizkammer, mit einer Kühlkammer sowie mit dem Träger mindestens eines Werkzeuges zum Schmelzen oder Gießen von Werkstücken, insbesondere aus Kunststoffen.

Mit einer derartigen Anordnung können nach dem Rotationsverfahren, und zwar durch Schmelzen oder Gießen Kunststoff-Hohlkörper entsprechend der Formgebung des Werkzeuges gefertigt werden. Bei einer bekannten Anordnung wird auf der Manipulationsstation das Werkzeug mit dem erforderlichen Kunststoffpulver gefüllt und nach dem Schließen mittels der Rotationsvorrichtung in eine Doppelrotationsbewegung um zwei senkrecht zueinander stehende Achsen versetzt. Mittels einer besonderen Anordnung, die drei sternförmig um ein Zentrum angeordnete Arbeitsarme aufweist, wobei eine Heizkammer, mindestens eine Kühlkammer und eine Manipulationsstation auf einem Kreis um dieses Zentrum hintereinander angeordnet sind, wird das gefüllte und geschlossene Werkzeug rotierend mit einem Arbeitsarm in die Heizkammer geschwenkt. Gleichzeitig wird mittels eines zweiten Armes ein anderes, zuvor in der Heizkammer befindliches Werkzeug abtransportiert und immer noch

0177906

rotierend in die Kühlkammer transportiert. Ein weiteres Werkzeug wird mit dem dritten Arm aus der Kühlkammer zur Manipulationsstation gefördert, an welcher das Werkzeug bzw. die Form geöffnet und das fertige Werkstück herausgenommen wird. Mit einer solchen Anordnung lassen sich Werkstücke der unterschiedlichsten Formen und Größen herstellen. Mehrfach geteilte Werkzeuge für immer komplizierter werdende Werkstücke, zahlreiche Werkzeugeinsätze für angeformte Stutzen, Gewinde, Schlauchtüllen und ähnliches sowie ferner vielfältige Einlegeteile in Form von Muttern, Hülsen, Flanschen usw. führen zu immer längeren Manipulationszeiten an der Manipulationsstation, während die Heizzeiten sich verringern lassen.

Auch die Kühlzeiten für die einzelnen Artikel können von sehr unterschiedlicher Dauer sein. Bei dieser Anordnung müssen sich stets zwei Arme der technologisch zwingend vorgegebenen Einzeltaktzeit des dritten Armes unterordnen und können deshalb nachteiligerweise fast niemals mit ihren optimalen Taktzeiten gefahren werden.

Ein derart vielfältiges Artikelprogramm mit für jeden Einzelartikel gegebenenfalls unterschiedlichen Taktparametern, verschiedenen und zunehmend kleineren Fertigungslosgrößen und somit vermehrten Rüstvorgängen führt auf den bekannten Anordnungen zu ungünstigen Maschinennutzungsgraden und treibt daher die Herstellungskosten in die Höhe.

0177906

Der Erfindung liegt daher die Aufgabe zugrunde, die Anordnung der eingangs genannten Art dahingehend weiterzubilden, daß jeder einzelne Werkzeugträger mit seiner optimalen Werkzeugstückzahl belegt und mit den optimalen Taktzeiten für das Heizen, Kühlen und Manipulieren gefahren werden kann und dadurch insgesamt eine wirtschaftliche, kostengünstige Fertigung gewährleistet wird. Die Anordnung soll einen einfachen Aufbau aufweisen und der Nutzungsgrad soll optimiert werden können, wobei auch unterschiedliche Zeiten für die Belegung von Heizkammer, Kühlkammer, Manipulationsstation und entsprechende Taktzeiten den Erfordernissen entsprechend vorgebbar sein sollen. Die Anordnung soll eine kompakte Bauweise aufweisen und es soll ein Stillstand zweier Arme bei Programmwechsel, Werkzeugstörungen oder extrem langen Einzeltaktzeiten des dritten Armes vermieden werden können.

Zur Lösung wird vorgeschlagen, daß wenigstens drei Kühlkammern kreisförmig um ein Zentrum angeordnet sind, in welchem die Heizkammer angeordnet ist. Ferner liegt in radialer Richtung außen vor der jeweiligen Kühlkammer die jeweilige Manipulationsstation.

Die erfindungsgemäße Anordnung zeichnet sich durch einen kompakten und funktionsgerechten Aufbau aus und gewährleistet einen optimalen Gesamtnutzungsgrad. Zwischen der einzigen Heizkammer und den Manipulationsstationen bzw. Kühlkammern pendeln erfindungsgemäß mehrere Werkzeugträger mit den Werkzeugen bzw. Formen unabhängig voneinander. Den Erfordernissen entsprechend werden wenigstens drei, im Rahmen der Erfindung bevorzugt vier bis fünf Kühlkammern samt Manipulationsstationen sternförmig bezüglich der zentral angeordneten Heizkammer vorgesehen. Die frei bewegbaren Werkzeugträger pendeln radial zwischen der Heizkammer und der Kühlkammer sowie der Manipulationsstation hin und her; es sei ausdrücklich festgehalten, daß erfindungsgemäß die Manipulation auch in der Kühlkammer vorgenommen werden kann. Die Kombination unterschiedlichster Einzeltakte für das jeweilige Werkzeug und zwar im Hinblick auf Heizen, Kühlen und Manipulieren, läßt sich unter wirtschaftlichen und terminlichen Gesichtspunkten in besonders rationeller Weise realisieren. Wesentlich ist ferner das gleichzeitige Aus- und Einfahren von zwei Werkzeugträgern in die Heizkammer und / oder die Kühlkammer. Aufgrund der erfindungsgemäß vorgeschlagenen Anordnung sind äußerst kurze Wege zwischen Heizkammer, Kühlkammern sowie unmittelbar davor angeordneter Manipulationsstation vorhanden, und eine kompakte Bauweise ist gegeben.

Zeitverluste infolge der Artikelvielfalt, immer kleineren Losgrößen, komplizierter Geometrie der Werkstücke werden durch die erfindungsgemäß vorgeschlagene Anordnung der Kühlkammern in radialer Richtung vor der Heizkammer bei geringem Bauaufwand und Platzbedarf in optimaler Weise vermieden. Die durch verringerte Heizzeiten und unterschiedlich lange Kühlzeiten bei immer länger werdenden Manipulationszeiten sich ergebende Zeitproblematik wird in überraschend einfacher Weise aufgelöst.

In einer besonderen Ausführungsform sind die bezüglich der Heizkammer radial angeordneten Kühlkammern direkt an die Heizkammer angebaut. Es sind extrem kurze Wege zwischen Heiz- und Kühlkammern vorhanden, und ein gesteuertes, gleichzeitiges Aus- und Einfahren von zwei Werkzeugträgern wird ermöglicht.

Nach einer weiteren erfindungswesentlichen Ausführungsform ist direkt neben der Manipulationsstation ein Stellplatz mit einem zweiten Werkzeugträger angeordnet. Der zweite Werkzeugträger kann beispielsweise für einen Werkzeugwechsel auf dem Stellplatz vorbereitet und manipuliert werden, so daß bei einem Programmwechsel, Werkzeugstörungen oder auch sehr langen Manipulationszeiten ein Maschinenstillstand verhindert werden kann. So kann auch während einer Spät- oder Nachtschicht ein Programmwechsel ohne weiteres geplant, vorbereitet und auch realisiert werden, ohne daß hierzu noch Wartungspersonal anwesend sein muß. Auch Versuche und Minilosgrößen können ohne Probleme in den Fertigungsablauf eingeplant werden.

Die Erfindung umfaßt ganz allgemein sämtliche Ausführungsformen, bei welchen die Werkzeugträger jeweils mit der Rotationseinrichtung und dem Werkzeug unabhängig voneinander verfahrbar sind und wenigstens drei Kühlkammern vorgesehen sind. So kann im Rahmen der Erfindung die Heizkammer um eine senkrechte Achse drehbar angeordnet sein. Bei dieser Ausführungsform wird die Heizkammer mit ihrer für den Werkzeugträger vorgesehenen Einfahröffnung derart gedreht, daß der Werkzeugträger und somit das Werkzeug aus unterschiedlichen radialen Richtungen, in welchen auch die Kühlkammern angeordnet sind, in die Heizkammer eingebracht werden können. Die Heizkammer kann sehr kompakt ausgebildet werden, wodurch erhebliche Platz- und Materialersparnisse erzielt werden. Es ist nur eine einzige Einfahröffnung erforderlich, wodurch nicht unwesentliche Vorteile im Hinblick auf Abdichtung und Energieverbrauch erzielt werden.

In einer weiteren Ausführungsform sind die drei Kühlkammern in einer Reihe nebeneinander angeordnet, und die Heizkammer ist parallel zu den nebeneinander angeordneten Kühlkammern ihrerseits verfahrbar. Die gesamte Anordnung erfordert einen minimalen Platzbedarf, wobei die unmittelbar nebeneinander angeordneten Kühlkammern insgesamt einen vergleichsweise geringen Fertigungsaufwand und Materialeinsatz erfordern.

Ferner liegen im Rahmen der Erfindung auch solche Anordnungen, bei welchen die Heizkammer in vertikaler Richtung verfahrbar ist. Die Heizkammer ist hierbei nach Art einer nach unten hin offenen Glocke ausgebildet, die mittels einer Hebevorrichtung vertikal nach oben angehoben, und nachdem das Werkzeug unter die Heizkammer verfahren ist, wieder nach unten abgesenkt werden kann. Diese Anordnung erfordert einen äußerst geringen Energieeinsatz, da beim Anheben der nur nach unten offenen Heizkammer ein Großteil der Wärme in der Heizkammer gespeichert bleibt.

Schließlich sei festgehalten, daß in allen Ausführungsformen erfindungsgemäß in die Heizkammer bzw. die Kühlkammern zum Heizen bzw. Kühlen nur das Werkzeug und die Rotationseinrichtung mit ihrem horizontal frei auskragenden Arm ragt, während die Antriebseinheit sowie der Werkzeugträger außerhalb der genannten Kammern verbleibt. Hierdurch wird eine äußerst kompakte Bauweise für sämtliche Ausführungsformen

- 7 -　　　　　0177906

gewährleistet, wodurch erhebliche Platz- und Materialersparnisse und ein insgesamt geringer konstruktiver Aufwand erzielt werden.

Weitere Vorteile und wesentliche Merkmale werden nachfolgend an Hand der in der Zeichnung dargestellten Ausführungsbeispiele erläutert. Es zeigen:

Fig. 1　schematisch eine Aufsicht auf eine Anordnung mit sternförmig angeordneten Kühlkammer, wobei im Zentrum eine einzige Heizkammer angeordnet ist,

Fig. 2　schematisch eine Aufsicht auf eine Anordnung, bei welcher die Heizkammer um eine senkrechte Achse drehbar angeordnet ist,

Fig. 3　schematisch eine Aufsicht auf eine Anordnung mit drei in einer Reihe nebeneinander angeordneten Kühlkammern und mit einer parallel zu den Kühlkammern verfahrbaren Heizkammer und

Fig. 4　eine seitliche Ansicht einer Anordnung ähnlich Fig.1 bis 3, bei welcher die Heizkammer vertikal verfahrbar ist.

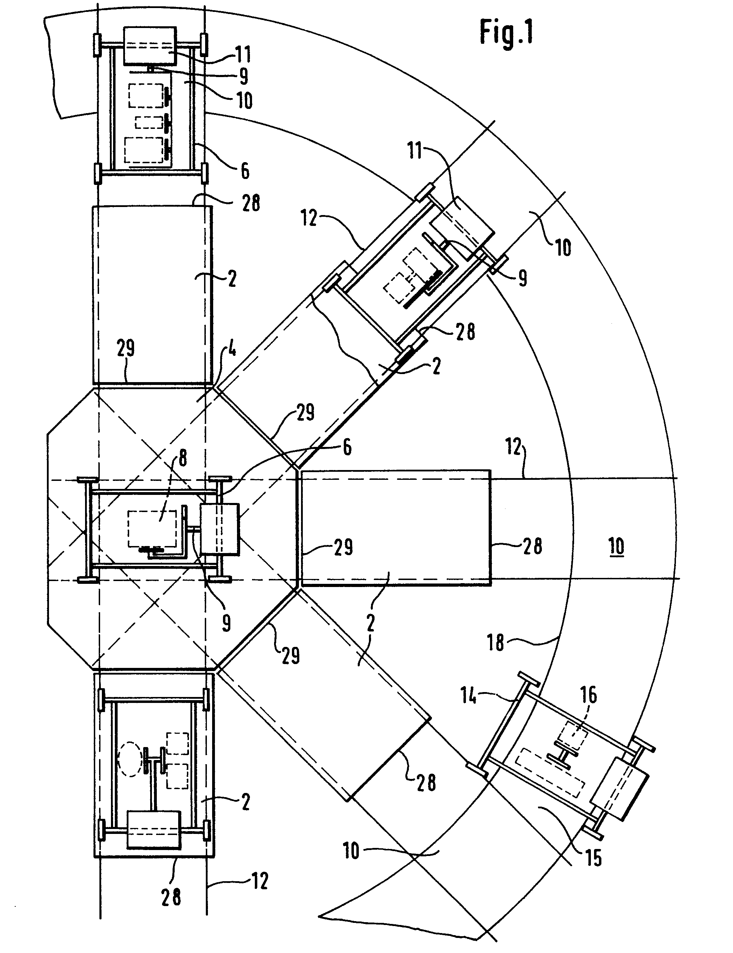

Fig. 1 zeigt schematisch eine Aufsicht auf die Anordnung mit fünf Kühlkammern 2, die auf einem Kreis angeordnet sind, in dessen Zentrum die Heizkammer 4 angeordnet ist. In der Heizkammer 4 ist ein Werkzeugträger 6 dargestellt, der ein Werkzeug 8, und zwar eine Form zur Herstellung eines Hohlkörpers, enthält. Das Werkzeug 8 wird mit einer auf dem Werkzeugträger 6 angeordneten Rotationsvorrichtung 9 in eine exakt gesteuerte Doppelrotation, und zwar eine Taumelbewegung um zwei senkrecht zueinander stehenden Achsen, versetzt, damit das im Inneren des Werkzeuges 8 befindliche
Kunststoffpulver sich gleichmäßig über die gesamte innere
Oberfläche des Werkzeuges 8 verteilen kann. Die Kühlkammern
2 sind direkt an die Heizkammer 4 angebaut und durch
Türen 28, 29 verschließbar. Vor der jeweiligen Kühlkammer 2 befindet sich jeweils eine Manipulationsstation 10. Zwischen der Manipulationsstation 10 und der
Heizkammer 4 ist eine hier gestrichelt dargestellte Transportbahn 12, und zwar eine Schiene, vorgesehen, die durch
die jeweilige Kühlkammer 2 verläuft. Der Werkzeugträger 6
ist hier als ein Wagen ausgebildet, der zusammen mit dem
Werkzeug 8 auf der Transportbahn 12 auf seinen Rädern verschiebbar ist. Der Werkzeugträger 6 enthält eine Antriebseinheit 11, mit welcher die Rotationsvorrichtung 9 zur Doppelrotation angetrieben wird. Ferner kann bei Bedarf im
Rahmen der Erfindung der Werkzeugträger mit der Antriebseinheit 11 verfahren werden.

Auf jeder der hier fünf Manipulationsstationen 10 kann das
auf dem Werkzeugträger 6 befindliche Werkzeug 8 manipuliert
werden. In der Manipulationsstation 10 erfolgt das Beschikken der geöffneten Form mit Material, das Schließen der Form
bzw. des Werkzeuges und nach erfolgtem Aufheizen und Kühlen
und Öffnen der Form die Entnahme des fertigen Produktes.
Ferner kann an der Manipulationsstation 10 auch der Werkzeugwechsel erfolgen. Die hier fünf Transportbahnen 12 sind
im Rahmen der Erfindung strahlenförmig bezüglich der zentral
angeordneten Heizkammer 4 angeordnet und verlaufen durch die
jeweiligen Kühlkammern 2 hindurch zur jeweiligen Manipulationsstation 10 hin.

Jeder Manipulationsstation 10 ist im Rahmen der Erfindung
ein Stellplatz 15 und / oder ein zweiter Werkzeugträger 14
zugeordnet, wobei aus Gründen der Übersichtlichkeit in der
Zeichnung nur ein einziger dargestellt ist. Dieser zusätzliche Werkzeugträger 14 befindet sich auf einem Stellplatz neben der Manipulationsstation 10. Auf dem Werkzeugträger 14
ist ein vollständig montiertes Folgewerkzeug 16 angeordnet,
so daß ein Programmwechsel ohne Beeinträchtigung der Produktion nach Verschieben des zusätzlichen Werkzeugträgers 14
zur Manipulationsstation 10 durchführbar ist. Es sei angemerkt, daß auf jedem der einzelnen Werkzeugträger 6 bzw. 14
unterschiedliche Werkzeuge bzw. Formen zur Herstellung von
Hohlkörpern unterschiedlichster Größe, Formgebung usw. angeordnet sein können. Zum Transport des bzw. der Werkzeugträger 14 zu den Manipulationsstationen 10 ist eine weitere
Transportbahn 18 vorgesehen, die hier durch kreisförmige
Linien angedeutet ist und welche erfindungsgemäß eine Kreisbahn um das Zentrum bzw. die Heizkammer 4 darstellt. Somit
können ggfs. die einzelnen Werkzeugträger 14 von der einen
auf die andere Transportbahn 12 gefahren werden.

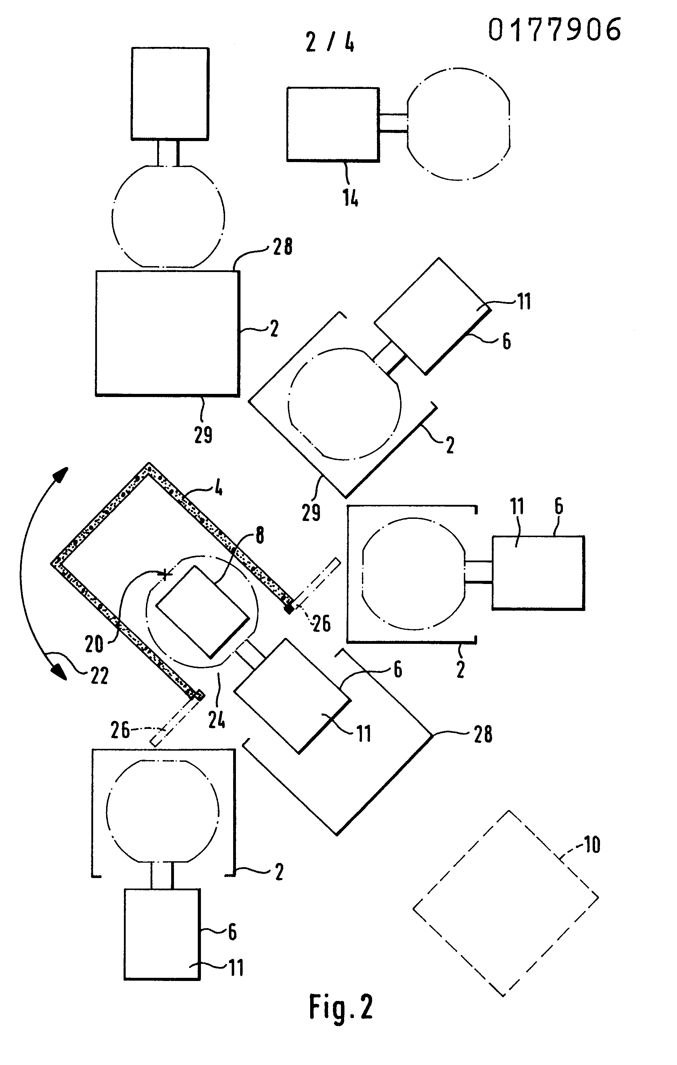

Fig. 2 zeigt schematisch eine Anordnung, die grundsätzlich
der oben erläuterten Anordnung entspricht, wobei jedoch
nunmehr die Heizkammer 4 um eine senkrechte Achse 20 entsprechend dem Pfeil 22 drehbar angeordnet ist. Die Heizkammer 4 kann mit ihrer Einfahröffnung 24 wahlweise auf eine
der fünf Kühlkammern ausgerichtet werden. Die Heizkammer 4
zeichnet sich durch eine kompakte Bauweise aus, wobei nur
eine einzige Einfahröffnung 24 vorhanden ist, die mittels
Türen 26 beim Heizen verschlossen wird. Die Kühlkammern 2
weisen an ihren beiden Stirnseiten Türen 28, 29 oder entsprechende Vorrichtungen auf, die einerseits das Einfahren
bzw. Hindurchfahren des Werkzeugträgers 6 samt Werkzeug 8
und Rotationsvorrichtung 9 ermöglichen und andererseits zum
Abkühlen des Werkzeuges 8 verschlossen werden können. Mit
strichpunktierten Linien sind die maximal möglichen Bewegungsgrenzen der Rotationsvorrichtung 9, nämlich der sogenannnten Rotationsdurchmesser, einschließlich des Werkzeuges
8 während der Rotation angedeutet.

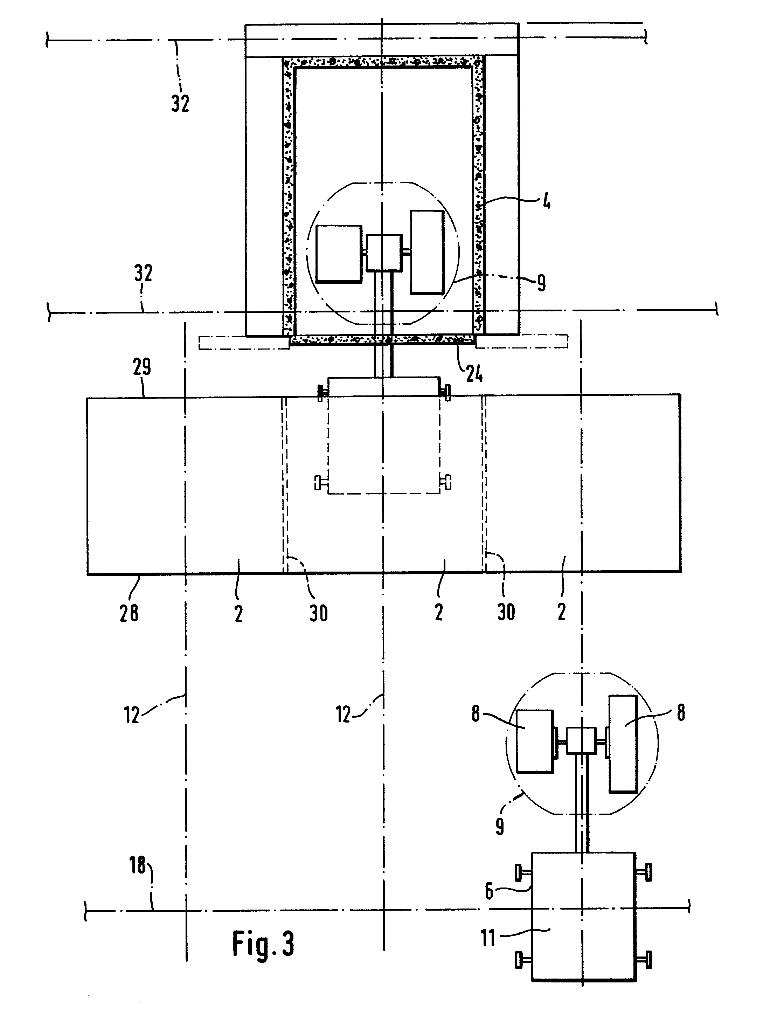

Fig. 3 zeigt eine Anordnung mit drei in einer Reihe nebeneinander angeordneten Kühlkammern 2. Die einzelnen Kühlkammern sind mittels Zwischenwänden 30 voneinander getrennt.
Die Heizkammer 4 ist entlang einer Bahn 32 parallel zu den
Kühlkammern 2 verfahrbar. Die Bahn 32 verläuft in einer
horizontalen Ebene quer zu den Transportbahnen 12 für die
Werkzeugträger 6. Entsprechend der Anordnung gemäß Fig. 1
ist auch bei dieser Ausführungsform eine weitere Transportbahn 18 vorhanden, auf welcher die Werkzeugträger 6 von der
einen zur anderen Transportbahn 12 oder zu einem Stellplatz
verfahrbar sind. Die Anzahl der Transportwagen 6 und der
Werkträger 8 kann aus den oben dargelegten Gründen erfindungsgemäß größer sein als die Anzahl der Kühlkammern 2.

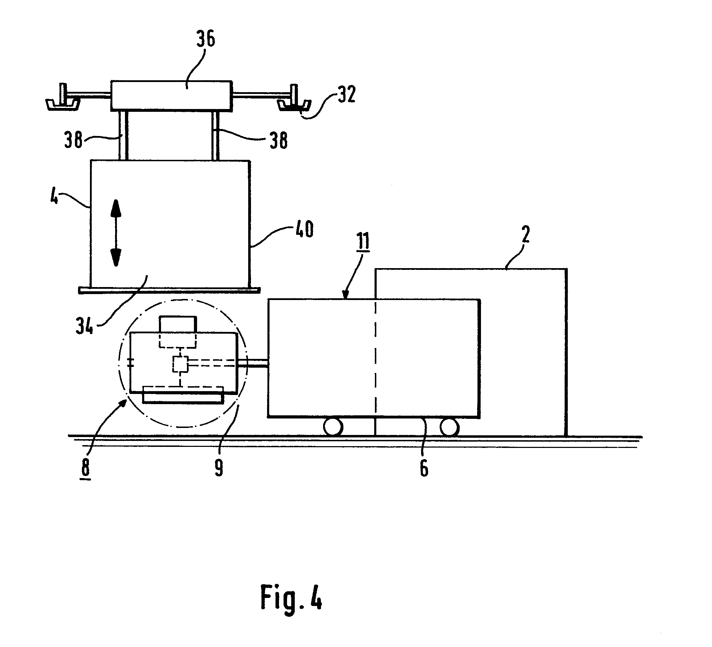

In Fig. 4 ist eine seitliche Ansicht einer Anordnung ähnlich
Fig. 3 dargestellt, wobei jedoch die Heizkammer 4 auch vertikal verfahrbar angeordnet ist. Die Heizkammer 4 ist ähnlich einer Glocke ausgebildet, die oben und zur Seite vollkommen geschlossen ist und unten eine Öffnung 34 aufweist.
Die Heizkammer 4 ist an einer Hebevorrichtung 36 mittels
Drahtseilen 38 oder dergleichen aufgehängt und entlang der
Bahn 32 verfahrbar. Die Hebevorrichtung 36 ist ähnlich einer
in Fabrikhallen üblichen Laufkatze auf der Bahn 32 verfahrbar. Die Bahn 32 enthält zweckmäßig Trägerschienen, die in
hinlänglich bekannter Weise in entsprechenden Tragkonstruktionen der Maschinenhalle aufgelagert sind. Der Werkzeugträger 6 mit der Antriebseinheit 11 und der Rotationsvorrichtung
9 trägt mindestens ein Werkzeug 8.
Nach der Positionierung des Werkzeugs 8 unterhalb die
Heizkammer 4 durch Vorfahren des Werkzeugträgers 6
kann diese    mittels der Hebevorrichtung 36 nach unten bis
auf den Boden abgesenkt werden. Es ist ersichtlich, daß
hierbei im Inneren der Heizkammer 4 ausschließlich das Werkzeug 8 samt Rotationsvorrichtung verbleibt, während die
Antriebseinheit 11 außerhalb der Heizkammer sich befindet.

In der Seitenwand 40 der Heizkammer 4 ist eine sich in vertikaler Richtung erstreckende Öffnung vorgesehen, durch welche der im wesentlichen horizontale frei auskragende Arm der Rotationsvorrichtung 9 hindurchgeführt ist. Diese Öffnung ist im übrigen mit geeigneten Mitteln verschließbar.

Es sei ausdrücklich darauf hingewiesen, daß auch bei allen erfindungsgemäßen Anordnungen entsprechend Fig. 4 in die Heizkammer lediglich das Werkzeug 8 mit der Rotationsvorrichtung 9 einfahrbar ist, während die Antriebseinheit und der Werkzeugträger beim Heizen außerhalb der Heizkammer sich befinden. Die Heizkammer benötigt ein entsprechend geringes Bauvolumen, und die Energiekosten können niedrig gehalten werden. Auch werden thermische Beanspruchungen der Antriebseinheit und des Werkzeugträgers weitgehend vermieden, wodurch nicht unwesentliche Vorteile hinsichtlich Lebensdauer und Funktionssicherheit erzielt werden.

Es ist ersichtlich, daß bei den erfindungsgemäßen Anordnungen die einzelnen Werkzeugträger unabhängig den Erfordernissen entsprechend von der Manipulationsstation zur Heizkammer bzw. Kühlkammer pendeln können, wobei die unterschiedlichsten Einzeltakte zum Manipulieren, Heizen und Kühlen in optimaler Weise eingehalten bzw. aufeinander abgestimmt werden können, um so eine wirtschaftliche Gesamtbelegung und Nutzung der Anordnung zu gewährleisten. In den einzelnen Kühlkammern 2 wird im Rahmen der Erfindung die Kühlung der Werkzeuge mit Luft oder auch mit Wasser vorgenommen, wobei die schonende Luftkühlung sich als besonders vorteilhaft erwiesen hat. Da die Kühlkammern 2 direkt an die zentrale Heizkammer 4 angebaut oder in unmittelbarer Nähe derselben angeordnet sind, werden äußerst kurze Wege realisiert, und das gleichzeitige Aus- bzw. Einfahren von zwei Werkzeugträgern 6 hat sich als besonders zweckmäßig herausgestellt. Der Nutzungsgrad jedes einzelnen Werkzeugträgers bzw. Wagens hängt praktisch nur noch von der Einhaltung der vorgegebenen Manipulationszeit ab, und er läßt sich durch geeignete Fertigungsplanung und -steuerung optimieren. Im Vergleich mit bekannten Anordnungen wird auch und gerade bei vielfältigem Programmwechsel und unterschiedlichen Taktparametern eine nicht unwesentliche Kapazitätssteigerung erreicht. Darüberhinaus ist besonders hervorzuheben, daß bei der erfindungsgemäßen Anordnung die vorzugebenden Manipulationszeiten unabhängig von den Maschinentakten zu planen und zu steuern sind.

0177906

Bezugszeichenliste

| | | |
|---|---|---|
| 2 | | Kühlkammer |
| 4 | | Heizkammer |
| 6 | | Werkzeugträger |
| 8 | | Werkzeug |
| 9 | | Rotationsvorrichtung |
| 10 | | Manipulationsstation |
| 11 | | Antriebseinheit |
| 12 | | Transportbahn |
| 14 | | zweiter Werkzeugträger |
| 15 | | Stellplatz |
| 16 | | fertig montiertes Folgewerkzeug |
| 18 | | weitere Transportbahn |
| 20 | | senkrechte Achse |
| 22 | | Pfeil |
| 24 | | Einfahröffnung von 4 |
| 26 | | Tür von 4 |
| 28, 29 | | Tür von 2 |
| 30 | | Zwischenwand |
| 32 | | Bahn |
| 34 | | Öffnung |
| 36 | | Hebevorrichtung |
| 38 | | Drahtseil |
| 40 | | Seitenwand |

0177906

Ansprüche

1. Anordnung einer Rotationsvorrichtung, mit einer Manipulationsstation, mit einer Heizkammer, mit einer Kühlkammer sowie mit einem Träger mindestens eines Werkzeuges zum Schmelzen oder Gießen von Werkstücken, insbesondere aus Kunststoff,
dadurch gekennzeichnet,
daß wenigstens drei Kühlkammern (2) kreisförmig um ein Zentrum angeordnet sind, in welchem die Heizkammer (4) angeordnet ist.

2. Anordnung nach Anspruch 1,
dadurch gekennzeichnet,
daß in radialer Richtung außen vor der jeweiligen Kühlkammer (2) die Manipulationsstation (10) angeordnet ist.

3. Anordnung nach Anspruch 1 oder 2,
dadurch gekennzeichnet,
daß die bezüglich der Heizkammer (4) radial nach außen angeordneten Kühlkammern (2) direkt an die Heizkammer (4) angebaut sind.

4. Anordnung nach einem der Ansprüche 1 bis 3,
dadurch gekennzeichnet,
daß unmittelbar neben einer Manipulationsstation (10) eine Station mit einem weiteren Werkzeugträger (14) angeordnet ist.

5. Anordnung nach einem der Ansprüche 1 bis 4,
dadurch gekennzeichnet,
daß zwischen der jeweiligen Manipulationsstation (10) und der Heizkammer (4) eine bevorzugt geradlinige Transportbahn (12) angeordnet ist.

0177906

6. Anordnung nach einem der Ansprüche 1 bis 5,
dadurch gekennzeichnet,
daß die Transportbahn (12) durch die Kühlkammer (2) hindurch
in die Heizkammer (4) verläuft.

7. Anordnung nach einem der Ansprüche 1 bis 6,
dadurch gekennzeichnet,
daß um die Heizkammer (4), und zwar im Bereich der Manipulationsstationen (10) eine zusätzliche, bevorzugt kreis- oder
halbkreisförmige Transportbahn (18) vorgesehen ist.

8. Anordnung nach einem der Ansprüche 1 bis 7,
dadurch gekennzeichnet,
daß die Transportbahnen (12, 18) als Schienen ausgebildet
sind, auf welchen die als Wagen ausgebildeten Werkzeugträger
(6, 14) angeordnet sind.

9. Anordnung, insbesondere nach einem der Ansprüche 1 bis 8,
mit einer Heizkammer, mit einer Kühlkammer sowie mit einem Träger
mindestens eines Werkzeuges zum Schmelzen oder Gießen von Werkstücken, insbesondere aus Kunststoff,
dadurch gekennzeichnet,
daß die Werkzeugträger (6), auf welchen jeweils insbesondere
die Rotationsvorrichtung (9) und mindestens ein Werkzeug (8) angeordnet
sind, unabhängig voneinander verfahrbar sind und daß wenigstens drei Kühlkammern (2) vorgesehen sind.

10. Anordnung nach einem der Ansprüche 1 bis 9,
dadurch gekennzeichnet,
daß die Heizkammer (4) um eine senkrechte Achse (20) drehbar
angeordnet ist, wobei die Einfahröffnung (24) wahlweise
bevorzugt auf eine der Kühlkammern (2) ausrichtbar ist.

0177906

11. Anordnung nach einem der Ansprüche 1 bis 9,
dadurch gekennzeichnet,
daß die Kühlkammern (2) in einer Reihe nebeneinander angeordnet sind und daß die Heizkammer (4) entlang einer Bahn
(32) verfahrbar und mit ihrer Einfahröffnung (24) wahlweise
bevorzugt auf eine der Kühlkammern (2) ausrichtbar ist.

12. Anordnung nach einem der Ansprüche 9 bis 11,
dadurch gekennzeichnet,
daß die Heizkammer (4) mittels einer Hebevorrichtung (36) in
vertikaler Richtung verfahrbar ist und eine untere Öffnung
(34) derart aufweist, daß das unter die Heizkammer (4) gefahrene Werkzeug (8) nach Absenken der Heizkammer (4) im
Inneren derselben sich befindet.

13. Anordnung nach einem der Ansprüche 1 bis 12,
dadurch gekennzeichnet,
daß die Kühlkammern (2) an ihren beiden Stirnseiten jeweils
Türen (28, 29) oder dergleichen aufweisen, daß jeweils ein
Werkzeugträger (6) mit mindestens einem Werkzeug (8) und der Rotationsvorrichtung (9) durch die Kühlkammer (2) hindurch fahrbar
ist und daß in die einzige Heizkammer (4) wahlweise eines
der Werkzeuge (8) einfahrbar ist, wobei die anderen der
unabhängig voneinander verfahrbaren Werkzeugträger (6) in
einer der Kühlkammern (2) und / oder der Manipulationsstationen (10) sich befinden.

0177906

**Fig.1**

0177906

Fig.2

Fig.3

Fig. 4